# EUROPÄISCHE PATENTSCHRIFT

(11) **EP 0 774 893 B1**
(45) Veröffentlichungstag und Bekanntmachung des Hinweises auf die Patenterteilung: **17.06.1998**
(21) Anmeldenummer: 95929031.3
(22) Anmeldetag: 31.07.1995
(51) Int. Cl.: A01G 3/08, B23D 51/00

(54) **BÜGELSÄGE**
BOW SAW
SCIE A ARCHET

(30) Priorität: 10.08.1994 DE 4428345
(43) Veröffentlichungstag der Anmeldung: 28.05.1997
(73) Patentinhaber: WOLF-Geräte GmbH Vertriebsgesellschaft KG, D-57518 Betzdorf/Sieg (DE)
(72) Erfinder: SCHNEIDER, Manfred, D-66606 St. Wendel (DE)
(74) Vertreter: Koch, Günther, Dipl.-Ing.
(86) Internationale Anmeldenummer: EP9503047
(87) Internationale Veröffentlichungsnummer: WO9604778

(56) Entgegenhaltungen:
- DE-C- 431 396
- DE-C- 3 130 703
- DE-U- 9 412 886
- US-A- 1 697 088

## Beschreibung

Die Erfindung bezieht sich auf eine als Bügelsäge ausgebildete Baumsäge. Derartige Baumsägen sind in zwei Varianten verfügbar. Bei der einen Variante, die beispielsweise als 'Dithmarsche Form' bekannt ist, befindet sich am hinteren Bügelabschnitt ein ergonomisch günstig geformter Handgriff, mit dem die Säge erfaßt und bequem bedient werden kann, sofern die zu sägenden Äste oder sonstigen Teile in Griffnähe befindlich sind.

Wenn ferner liegende Gegenstände, beispielsweise hoch oder fern liegende Äste, abgesägt werden sollen, werden Sägen benutzt, die mit einem Verlängerungsstiel, beispielsweise mit einem Teleskopstiel, verbindbar sind. Es gibt Blattsägen, an die entweder ein Handgriff oder ein Stiel über eine entsprechende Kupplung angesetzt werden kann (US-A-1697088). Für als Bügelsäge ausgebildete Baumsägen hat man den Bügel mit einer zylindrischen oder konischen Tülle ausgerüstet, in die ein Verlängerungsstiel eingesetzt werden kann. Die Handhabung einer solchen Säge ohne Stiel ist jedoch mühsam und ungünstig, weil kein bequem zugänglicher Handgriff vorhanden ist und die Säge am Bügel und/oder an der Tülle erfaßt werden muß.

Der Erfindung liegt daher die Aufgabe zugrunde, eine als Bügelsäge ausgebildete Baumsäge zu schaffen, die wahlweise mit dem üblichen ergonometrisch günstig geformten Handgriff oder über einen Verlängerungsstiel benutzt werden kann, um entfernt liegendes Gut zu sägen.

Gelöst wird die gestellte Aufgabe durch die Gesamtheit der im Patentanspruch 1 angegebenen Merkmale. Der Oberbegriff von Anspruch 1 ist aus US-A-1697088 bekannt. Durch die erfindungsgemäße Anordnung der Kupplungsteile am Ende des Bügelbogens wird erreicht, daß ihr Vorhandensein nicht wahrgenommen wird und die Handhabung der Säge nicht beeinträchtigt werden kann, weil jene Kupplungsteile innerhalb des Handgriffs eingebettet liegen, wenn die Säge direkt mit der Hand bedient werden soll. Durch Abklappen eines Griffstücks, das vorzugsweise als Griffschale ausgebildet ist, werden nach einer zweckmäßigen Ausgestaltung der Erfindung die an der Säge vorgesehenen Kupplungselemente automatisch in ihre Wirkstellung überführt, so daß nach Aufschieben eines Verlängerungsstiels auf einen das Kupplungselement der Säge bildenden Geräteeinsteckzapfens die Säge unmittelbar funktionsbereit ist.

Als Stielbefestigungskupplung wird vorzugsweise eine Stielbefestigungskupplung gemäß der DE 31 30 703 C2 benutzt, jedoch sind auch andere Stielbefestigungskupplungen verwendbar, auch solche, die bereits auf dem Markt befindlich sind, unter der Voraussetzung, daß sie ein dem Geräteeinsteckzapfen (oder seinem Gegenstück) entsprechendes Kupplungselement aufweisen, welches derart schwenkbar am Bügel anlenkbar ist, daß es bei Nichtgebrauch vom Handgriff überdeckt wird und in Kupplungsstellung formschlüssig in einer Lage oder auch in mehreren Lagen verriegelbar ist.

Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 eine Seitenansicht einer erfindungsgemäß ausgebildeten Bügelsäge mit eingeklapptem Handgriff, der aufgebrochen dargestellt ist, um den eingeklappten Geräteeinsteckzapfen sichtbar zu machen,
Fig. 2 die in Fig. 1 dargestellte Bügelsäge mit einem über eine Stielbefestigungskupplung am Griffbügelende festgelegten Stiel,
Fig. 3 die Befestigung und Lagerung des Geräteeinsteckzapfens am Griffbügelende in Draufsicht in Grundrißansicht und in verschiedenen Schnittansichten.

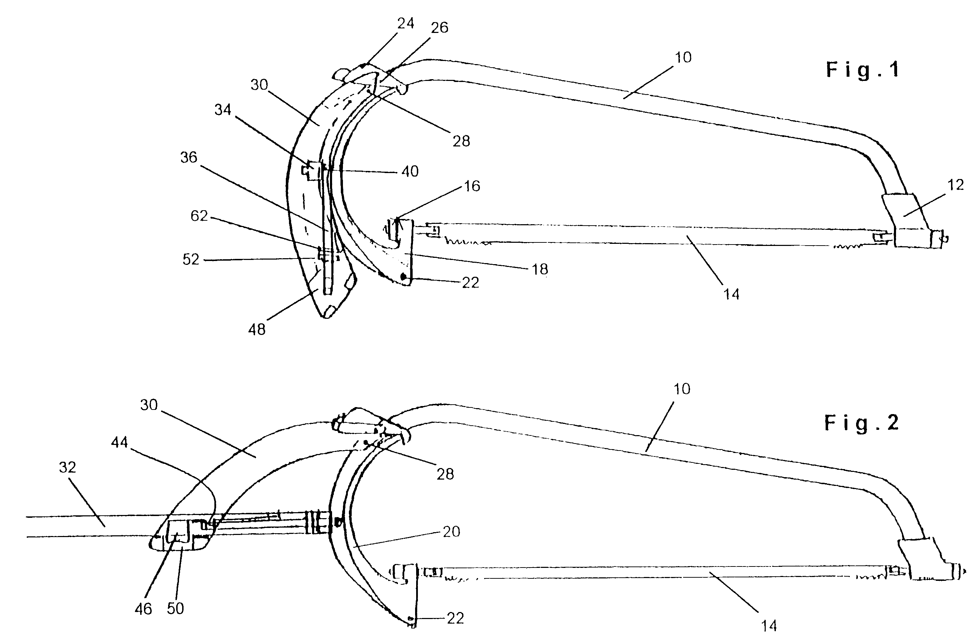

Fig. 1 zeigt eine als Baumsäge ausgebildete Bügelsäge der sogenannten 'Dithmarschen Form', wie sie im Obst-, Garten- und Weinbau sowie für den Baubereich, den Heimwerker und dergleichen zum Einsatz kommt.

Die Säge weist einen Bügel 10 auf, der an seinem Vorderende das vordere Aufnahmelager 12 für das Sägeblatt 14 trägt. Das hintere Aufnahmelager 16 für das Sägeblatt ist in einem kurzen Hebelarm 18 eines Spannhebels 20 angeordnet, der über eine Drehachse 22 am hinteren Ende des Bügels angelenkt ist und der dem hinteren Abschnitt des Bügels 10 in der Form anpaßt ist. Der Spannhebel 20 wird in der Spannstellung durch einen Kipphebel 24 gesichert, der mittels einer Drehachse 26, wie aus Fig. 1 und 2 ersichtlich, am Bügel 10 angelenkt ist. Über eine weitere Drehachse 28 ist am Bügel 10 eine den Handgriff bildende Griffschale 30 angelenkt, die im eingeschwenkten Zustand (Fig. 1) den hinteren Abschnitt des Bügels 10 derart umschließt, daß die Bügelsäge bei geschlossenem Griff (Fig. 1) ergonometrisch günstig erfaßt werden kann. Die Griffschale 30 ist um die Drehachse 28 in die aus Fig. 2 ersichtliche Stellung ausschwenkbar, in der in nachstehend beschriebener Weise ein Stiel 32 über eine Stielbefestigungskupplung am Bügel 10 festlegbar ist, so daß über dem Stiel die Säge geführt werden kann, um hoch oder entfernt liegende Äste zu schneiden. Sowohl in der eingeklappten Lage gemäß Fig. 1 als auch in der ausgeschwenkten Lage gemäß Fig. 2 kann der Kipphebel betätigt werden, um den Spannhebel 20 freizugeben bzw. zu verriegeln, so daß in den beiden Stellungen gemäß Fig. 1 und 2 das Sägeblatt um die Einspannachse verdreht oder nach Abnutzung durch ein neues ersetzt werden kann.

Die Stielbefestigungskupplung, die die Verbindung zwischen dem Stiel 32 und dem hinteren Bügelende schafft, ist zweckmäßigerweise derart ausgebildet, wie es in der DE 31 30 703 C2 beschrieben ist. Die Erfindung ist jedoch nicht auf diese Bauart der Stielbefestigungskupplung beschränkt und es können auch andere Kupplungen benutzt werden, die eine Trennung von Bügelsäge und Stiel ermöglichen. Voraussetzung ist, daß der Handgriff, das heißt die Griffschale 30, bei abgenommenem Stiel die aus Fig. 1 ersichtliche Normallage einnehmen kann, in der die Säge ergonometrisch günstig gehandhabt werden kann.

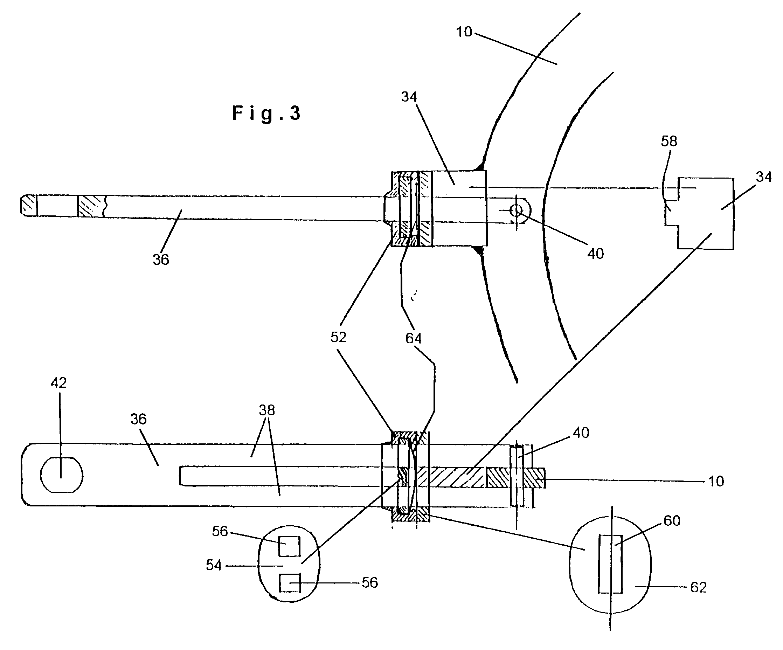

Im Mittelabschnitt des hinteren Bügelbogens ist ein im Querschnitt rechteckiges Rastelement 34 angeschweißt, welches am deutlichsten aus den verschiedenen Darstellungen gemäß Fig. 3 erkennbar ist. Ein Geräteeinsteckzapfen 36 ist gabelartig ausgebildet und umschließt mit seinen Gabelarmen 38 den hinteren Bogenabschnitt des Bügels 10 bzw. das Rastelement 34, wo er über eine Drehachse 40 schwenkbar angelenkt ist. Die Drehachse 40 befindet sich in der vorderen Verlängerung der Mittelachse des Rastelements 34 und die Anordnung ist derart getroffen, daß der Geräteeinsteckzapfen 36 in der Stellung gemäß Fig. 1 derart eingeschwenkt ist, daß er von der Griffschale umschlossen ist und die Handhabung des Griffs nicht behindert. Der Geräteeinsteckzapfen 36 weist ein Verriegelungsloch 42 auf, in das eine Kupplungsblattfeder 44 mit einer Riegelfalle einrasten kann, die im Stiel 32 eingebaut ist und durch einen Knopf 46 entriegelt werden kann. Wie aus Fig. 2 ersichtlich, liegt der Knopf 46 in eingekuppelter Stellung innerhalb der Griffschale 30 geschützt, so daß er nicht unbeabsichtigt durch Äste oder dergleichen gelöst werden kann. Wie aus Fig. 2 weiter ersichtlich, durchsetzt der Stiel 32 die Griffschale in einem Durchgangsloch 48 und der Knopf 46 ist durch eine Ausnehmung 50 der Griffschale in der Stellung gemäß Fig. 2 entriegelbar.

Die Formschlußverbindung zwischen Stiel 32 und Rastelement 34 bzw. Bügel 10 wird auf folgende Weise bewerkstelligt:

Auf dem Geräteeinsteckzapfen 36 ist eine Manschette 52 verschiebbar, die stirnseitig der vorderen Stirnseite des Stiels angepaßt ist. Diese Manschette umschließt eine Sicherungsscheibe 54, die zwei Führungslöcher 56 aufweist, welche auf den Gabelarmen 38 laufen, wodurch ein Abfallen der Manschette vom Geräteeinsteckzapfen 36 verhindert ist. Die Gabelarme 38 des Geräteeinsteckzapfens 36 umschließen, wie aus Fig. 3 ersichtlich, das Rastelement, welches einen dem Stiel zugewandten rechteckigen Verriegelungsansatz 58 aufweist, der in der Stellung gemäß Fig. 2 und 3 in die Rechteckausnehmung 60 einer Überwurfscheibe 62 eingreift, die mit der Manschette und der Sicherungsscheibe auf dem Geräteeinsteckzapfen verschiebbar ist. Eine Tellerfeder 64 oder eine Blattfeder ist zwischen der Sicherungsscheibe 54 und der Überwurfscheibe 62 zum Toleranzausgleich vorgesehen. Um einen Stiel 32 über die Stielbefestigungskupplung an der Bügelsäge festzulegen, wird die Griffschale 30 um die Drehachse 28 aus der Stellung gemäß Fig. 1 in die Stellung gemäß Fig. 2 verschwenkt. Bei dieser Schwenkbewegung wird automatisch der Geräteeinsteckzapfen 36 um seine Drehachse 40 verschwenkt, weil sein Ende über das Durchgangsloch 48 der Griffschale oder einen entsprechenden inneren Ansatz der Griffschale mitgeschleppt wird. In dieser Stellung gemäß Fig. 2 kann der Stiel 32 durch das Loch 48 auf den Geräteeinsteckzapfen aufgeschoben werden, wobei die Stirnseite des vorderen mit Geräteeinsatzloch versehenen Stiels gegen die Manschette 52 drückt und den Geräteeinsteckzapfen und damit den Stiel an einer Schwenkbewegung um die Achse 40 dadurch hindert, daß die Überwurfscheibe 62 die Gabelarme gegenüber dem Verriegelungsansatz 58 des Rastelementes 34 festlegt.

Diese Verriegelung kommt automatisch zustande, wenn der Stiel auf den Geräteeinsteckzapfen aufgeschoben wird.

Nach Entriegelung der Kupplung durch Druck auf den Knopf 46 kann der Stiel vom Geräteeinsteckzapfen abgezogen werden und die Manschette 52 kann mit Sicherungsscheibe 54 und Überwurfscheibe 62 durch Hand zurückgezogen werden, um die Verriegelung zwischen der Scheibe 62 und dem Verriegelungsvorsprung 58 freizugeben. Dann kann die Griffschale 30 in die Stellung gemäß Fig. 1 zurückgeführt werden, wobei der Geräteeinsteckzapfen automatisch mitgenommen wird.

### Bezugszeichenliste

- 10: Bügel
- 12: Aufnahmelager
- 14: Sägeblatt
- 16: hinteres Aufnahmelager
- 18: kurzer Hebelarm
- 20: Spannhebel
- 22: Drehachse
- 24: Kipphebel
- 26: Drehachse
- 28: Drehachse
- 30: Griffschale
- 32: Stiel
- 34: Rastelement
- 36: Geräteeinsteckzapfen
- 38: Gabelarme
- 40: Drehachse
- 42: Loch
- 44: Kupplungsblattfeder
- 46: Knopf
- 48: Durchgangsloch
- 50: Ausnehmung
- 52: Manschette
- 54: Sicherungsscheibe
- 56: Führungslöcher
- 58: Verriegelungsansatz
- 60: Rechteckausnehmung
- 62: Überwurfscheibe
- 64: Tellerfeder

## Patentansprüche

1. Baumsäge mit einem die Säge ausspannenden Bügel (10) und einem Handgriff (30), dadurch gekennzeichnet, daß der Handgriff an dem einen Ende des Bügels (10) um eine quer zum Sägeblatt (14) angeordnete Achse (28) schwenkbar angelenkt ist, daß
an dem vom eingeschwenkten und damit geschlossenen Handgriff überbrückten Endabschnitt des Bügels ein Geräteeinsteckzapfen (36)einer Stielbefestigungskupplung schwenkbar angelenkt ist, daß
der schalenartig ausgebildete Handgriff im geschlossenen Zustand den eingeschwenkten Geräteeinsteckzapfen übergreift, und daß
der Geräteeinsteckzapfen (36) im ausgeschwenkten Zustand formschlüssig gegenüber dem Bügel (10) verriegelbar ist.

2. Bügelsäge nach Anspruch 1,
dadurch gekennzeichnet,
daß der Handgriff (30) im ausgeschwenkten, geöffneten Zustand mit dem seiner Anlenkachse (28) abgewandten Abschnitt einen auf den Geräteeinsteckzapfen (36) aufsteckbaren Gerätestiel (32) im Bereich dessen Entriegelungsknopfes (46) schützend umschließen kann.

3. Bügelsäge nach Anspruch 2,
dadurch gekennzeichnet,
daß der Entriegelungsknopf (46) durch eine Ausnehmung (50) des ausgeschwenkten Handgriffs (30) zugänglich ist.

4. Bügelsäge nach einem der Ansprüche 1 - 3,
dadurch gekennzeichnet,
daß der Geräteeinsteckzapfen (36) gabelartig ausgebildet ist und mit seinen Gabelarmen (38) den Bügel (10) und ein hieran angenetztes Rastelement (34) umgreift und daß der Geräteeinsteckzapfen (36) über seine Gabelarme (38) am Bügel (10) oder am Rastelement (34) über eine Drehachse (40) angelenkt ist.

5. Bügelsäge nach Anspruch 4,
dadurch gekennzeichnet,
daß auf dem Geräteeinsteckzapfen (36) eine den Stielanschlag bildende Manschette (52) mit einer Überwurfscheibe (62) verschiebbar ist und daß die Überwurfscheibe (62) in Verriegelungsstellung mit einer Rechteckausnehmung (60) die Gabelarme (38) und einen Verriegelungsansatz (58) des Rastelementes (34) umschließt.

6. Bügelsäge nach einem der Ansprüche 1 - 5,
dadurch gekennzeichnet,
daß in der Manschette (52) eine Sicherungsscheibe (54) angeordnet ist, die mit zwei Führungslöchern (56) auf den Gabelarmen gleitet und mit dem zwischen den Führungslöchern (56) liegenden Steg eine Anschlagbegrenzung am Gabelgrund bildet.

7. Bügelsäge nach Anspruch 6,
dadurch gekennzeichnet,
daß zwischen der Sicherungsscheibe (54) und der Überwurfscheibe (62) eine Spielausgleichsfeder (64) in Gestalt einer Blattfeder oder einer Tellerfeder angeordnet ist.

8. Bügelsäge nach einem der vorhergehenden Ansprüche,
dadurch gekennzeichnet,
daß der Geräteeinsteckzapfen (36) bewegungsschlüssig mit dem Handgriff (30) derart gekuppelt ist, daß beim Ausschwenken des Handgriffes der Geräteeinsteckzapfen in seine Funktionsstellung überführt wird.

9. Bügelsäge nach Anspruch 8,
dadurch gekennzeichnet,
daß daß die Manschette ((52) mit Überwurfscheibe (62) beim Aufstecken des Stiels (32) auf den Geräteeinsteckzapfen (36) automatisch in die Verriegelungsstellung überführt wird.

10. Bügelsäge nach Anspruch 1, bei welcher das Sägeblatt (14) über einen am Bügel (10) angelenkten Spannhebel (20) spannbar bzw. zum Zwecke der Verdrehung oder Auswechslung entspannbar ist, wobei der Spannhebel (20) durch einen Kipphebel (24) in Spannstellung am Bügel (10) festlegbar ist,
dadurch gekennzeichnet,
daß Kipphebel (24) und Spannhebel (20) in jeder Lage des schwenkbaren Handgriffes frei betätigbar sind.

## Claims

1. Tree saw with a frame (10) across which the saw extends and with a handle (30), characterised in that the handle (10) is hinged at one end of the frame (10) so as to swivel about an axis (28) disposed at a right angle to the saw blade (14), that hinged with a swivelling action on the end section of the frame spanned by the retracted and hence closed handle is an implement insert pin (36) of a haft attachment coupling, that when it is closed the handle, which is constructed in the manner of a shell, engages around the retracted implement insert pin, and that when it has been swung out the implement insert pin (36) can be positively interlocked relative to the frame (10).

2. Frame saw according to claim 1, characterised in that when it has been swung out and is open, the handle (30) is able, with the section thereof furthest from its articulation axis (28), to protectively enclose an implement haft (32) which is adapted to be pushed onto the implement insert pin (36) in the vicinity of the release button (46) thereof.

3. Frame saw according to claim 2, characterised in that the release button (46) is accessible through a recess (50) in the handle (30) once the latter is swung out.

4. Frame saw according to any of claims 1 to 3, characterised in that the implement insert pin (36) is a fork-like construction and with its fork arms (38) it engages around the frame (10) and a locking element (34) attached to said frame, and that the implement insert pin (36) is hinged on the frame (10) via its fork arms (38) or on the locking element (34) via a pivot axis (40).

5. Frame saw according to claim 4, characterised in that a collar (52) which forms the limit stop for the haft is adapted to be displaced with a sleeve washer (62) along the implement insert pin (36) and that in the interlocked position the sleeve washer (62) encloses with a rectangular recess (60) the fork arms (38) and an interlocking shoulder (58) of the locking element (34).

6. Frame saw according to any of claims 1 to 5, characterised in that disposed in the collar (52) is a retaining washer (54) which with two guide holes (56) slides along the fork arms and with the web situated between the guide holes (56) forms a stop boundary on the base of the fork.

7. Frame saw according to claim 6, characterised in that disposed between the retaining washer (54) and the sleeve washer (62) is a clearance compensating spring (64) in the form of a leaf spring or a cup spring.

8. Frame saw according to any of the preceding claims, characterised in that the implement insert pin (36) is coupled to the handle (30) so as to be constrained to move therewith in a manner such that when the handle is swung out the implement insert pin is transferred to its operational position.

9. Frame saw according to claim 8, characterised in that when the haft (32) is pushed onto the implement insert pin (36), the collar (52) with the sleeve washer (62) is automatically transferred to the interlocking position.

10. Frame saw according to claim 1, on which the saw blade (14) is adapted to be clamped via a clamping lever (20) hinged on the frame (10) and unclamped in order to turn it round or replace it, the clamping lever (20) being adapted to be fixed in the clamping position on the frame (10) by a tilting lever (24), characterised in that the tilting lever (24) and the clamping lever (20) are adapted to be operated freely when the swivelling handle is in any position.

## Revendications

1. Scie à bois, avec un archet (10) tendant la scie et avec une poignée (30), **caractérisée** en ce que la poignée est articulée, à une extrémité de l'archet (10), à pivotement autour d'un axe (28) disposé transversalement à la lame de scie (14), en ce qu'un tenon d'emboîtement d'accessoire (36) d'un accouplement de fixation de manche est articulé à pivotement à la partie terminale de l'archet surmontée par la poignée rabattue et donc fermée, en ce que la poignée réalisée sous forme de coque recouvre à l'état fermé le tenon d'emboîtement d'accessoire rabattu, et en ce que le tenon d'emboîtement d'accessoire (36) peut être verrouillé, à l'état déployé, en engagement positif par rapport à l'archet (10).

2. Scie à archet selon la revendication 1, **caractérisée** en ce que la poignée (30) peut, à l'état déployé, ouvert, par sa partie opposée à son axe d'articulation (28), entourer en le protégeant un manche accessoire (32), qui peut être emboîté sur le tenon d'emboîtement d'accessoire (36), dans la région du bouton de déverrouillage (46) de ce manche.

3. Scie à archet selon la revendication 2, **caractérisée** en ce que le bouton de déverrouillage (46) est accessible par un évidement (50) de la poignée déployée (30).

4. Scie à archet selon une des revendications 1 à 3, **caractérisée** en ce que le tenon d'emboîtement d'accessoire (36) est réalisé en forme de fourche et s'engage par ses bras de fourche (38) autour de l'archet (10) et d'un élément de crantage (34) mis en place sur ce dernier, et en ce que le tenon d'emboîtement d'accessoire (36) est articulé par ses bras de fourche (38) à l'archet (10) ou à l'élément de crantage (34) par l'intermédiaire d'un axe de rotation (40).

5. Scie à archet selon la revendication 4, **caractérisée** en ce qu'un manchon (52), constituant la butée de manche et pourvu d'une rondelle d'accouplement (62), peut coulisser sur le tenon d'emboîtement d'accessoire (36), et en ce que la rondelle d'accouplement (62), en position de verrouillage, enserre par un évidement rectangulaire (60) les bras de fourche (38) et un appendice de verrouillage (58) de l'élément de crantage (34).

6. Scie à archet selon une des revendications 1 à 5, **caractérisée** en ce qu'une rondelle de blocage (54) est disposée dans le manchon (52), rondelle qui coulisse par deux trous de guidage (56) sur les bras de fourche et constitue, par sa partie médiane située entre les trous de guidage (56), une butée de limitation contre le fond de la fourche.

7. Scie à archet selon la revendication 6, **caracterisée** en ce qu'un ressort de compensation de jeu (64), sous la forme d'un ressort à lame ou d'une rondelle-ressort, est disposé entre la rondelle de blocage (54) et la rondelle d'accouplement (62).

8. Scie à archet selon une des revendications précédentes, **caractérisée** en ce que le tenon d'emboîtement d'accessoire (36) est accouplé à la poignée (30) en lui étant lié en déplacement de telle sorte que le tenon d'emboîtement d'accessoire est transféré dans sa position fonctionnelle lorsque la poignée est déployée.

9. Scie à archet selon la revendication 8, **caractérisée** en ce que le manchon (52) pourvu de la rondelle d'accouplement (62) est automatiquement transféré en position de verrouillage lors de l'emboîtement du manche (32) sur le tenon d'emboîtement d'accessoire (36).

10. Scie à archet selon la revendication 1, dont la lame de scie (14) peut, au moyen d'un levier tendeur (20) articulé sur l'archet (10), être tendue ou détendue pour la tourner ou la remplacer, le levier tendeur (20) pouvant être fixé en position tendue sur l'archet (10) par un levier basculant (24), **caractérisée** en ce que le levier basculant (24) et le lever tendeur (20) peuvent être librement actionnés dans toutes les positions de la poignée pivotante.
